# EUROPEAN PATENT SPECIFICATION

(11) **EP 1 791 489 B1**
(45) Date of publication and mention of the grant of the patent: **07.10.2015**
(21) Application number: 05782637.2
(22) Date of filing: 05.08.2005
(51) Int. Cl.: A61C 5/04

(54) **HEATER FOR ENDODONTIC CONDENSER**
HEIZGERÄT FÜR ENDODONTISCHEN KONDENSATOR
CHAUFFAGE POUR CONDENSEUR ENDODONTIQUE

(30) Priority: 09.08.2004 US 915159
(43) Date of publication of application: 06.06.2007
(73) Proprietor: Aseptico, Inc., Woodinville, WA 98072-1548 (US)
(72) Inventor: HANISKO, Francis Dushan, Seattle, WA 98103-4324 (US)
(74) Representative: Ferreccio, Rinaldo
(86) International application number: PCT/US2005/027848
(87) International publication number: WO 2006/020505

(56) References cited:
- EP-A- 0 009 129
- US-A- 4 527 560
- US-A- 4 704 088
- US-A- 5 043 560
- US-B1- 6 312 261

## Description

### Background

Many dentists and other medical professionals use endodontic condensers to pack gutta percha and other materials into voids in a tooth. Voids are typically generated when a dentist or other medical professional removes decayed material from a tooth, such as the tooth's pulp. To fill the void left in a tooth a dentist or other medical professional first inserts pre-formed chunks of gutta percha or injects gutta percha through an endodontic obturator. Because the void in the tooth is often irregularly shaped and may contain branches or canals projecting from a main body of the void, inserting or injecting the gutta percha into the tooth rarely fills the void completely. Thus, a dentist or other medical professional often uses an endodontic condenser to work or pack the gutta percha into the remaining unfilled portions of the void.

Because gutta percha softens when warmed, most condensers include a heater at their tip to warm the gutta percha and facilitate its flow throughout the void. Gutta percha softens when warmed to a temperature between 53°C and 57°C. If the heater overheats the gutta percha, however, the gutta percha can degrade. In addition, if the heater overheats the patient's tooth and/or gum, the tooth and/or gum may become painful and/or damaged. Therefore, many condensers , like the ones disclosed in US 5 043 560 A or US 6 312 261 B, include a component for determining the temperature of the condenser's tip, and circuitry for increasing and decreasing the temperature.

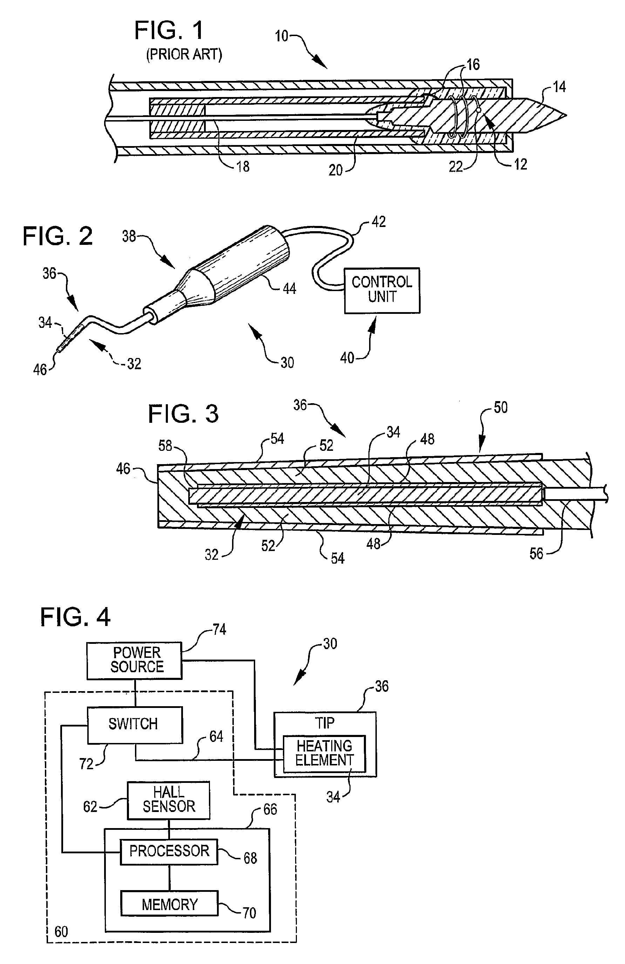

For example, FIG. 1 shows a conventional condenser 10 that includes a thermocouple 12 to approximate the temperature of the tip 14, which may be used to pack gutta percha and other materials into voids in teeth, and circuitry (not shown) to modify the temperature of the tip. The condenser 10 also includes an electrically resistive heating element 16 for generating heat, and a lead 18 connected to the tip 14 for powering the heating element 16. When the heating element 16 generates heat, electricity flows from the lead 18 through a portion of the tip 14 to the junction 22 of the heating element 16 and the tip 14, and then through the housing 20. By making the heating element 16 and tip 14 from different materials, the junction 22 also forms the thermocouple 12. To determine the temperature of the tip 14, power in the lead 18 is stopped and the voltage generated by the dissimilar materials of the junction 22 is measured. Because the voltage generated by the junction 22 corresponds to the temperature of the junction 22, an approximate temperature of the tip 14 may be determined.

Unfortunately, using the thermocouple 12 to determine the temperature of the tip 14 has some drawbacks. Because the thermocouple 12 generates a voltage at the junction 22, the heating element 16 must be turned off when sensing this voltage to avoid corrupting the voltage and thus altering the determined temperature of the tip 14. Consequently, the temperature of the tip 14 fluctuates between its coolest temperature, which occurs just before power to the heating element 16 is restored, and its warmest temperature, which occurs just before one stops power to the heating element 16 to measure the voltage generated by the junction 22. Thus, the temperature determined from the generated voltage does not reflect the temperature of the tip 14 when the heating element 16 generates heat, and is typically less than the warmest temperature of the tip 14. Furthermore, the voltage generated by the thermocouple 12 may be easily corrupted by other junctions of dissimilar materials in the thermocouple's circuit, and/or electrical noise from other circuits of the condenser 10, and, thus, cause the determined temperatures to be inaccurate.

Another drawback to using the thermocouple 12 is that the materials selected to make the tip 14 and heating element 16 are typically selected to maximize the voltage generated by the thermocouple 12; not to maximize the heating and mechanical properties of the condenser 10. For example, the heating element 16 is typically made from the same material as the lead 18 to reduce the number of junctions having dissimilar materials. The lead 18 is typically made of copper because copper is an inexpensive and efficient electrical conductor. Therefore, the heating element 16 is also typically made of copper and does not efficiently generate heat by resisting the flow of electricity. Thus, the heating element 16 requires much power to heat the tip 14.

Other methods of determining the temperature of the tip 14 include using a Wheatstone bridge (not shown) to determine the resistance of the heating element 16. Because a resistor's resistance depends on the temperature of the resistor, one can determine the resistor's temperature from the resistor's resistance. A Wheatstone bridge includes three resistors whose resistance is known and a fourth resistor - the heating element - whose resistance is not known arranged to form a conventional bridge circuit.

Unfortunately, a Wheatstone bridge has some drawbacks too. The additional resistors in the Wheatstone bridge generate heat when electricity flows through them. The heat raises the temperature of each additional resistor, which consequently changes the resistance of each additional resistor. Therefore, one must determine the actual resistance of the additional resistors to accurately determine the resistance of the heating element.

Document US 4 704 088 A discloses an endodontic dispensing device with a needle and a cartridge chamber having both an electrically resistive heating element. A control circuit checks the temperature of the cartridge chamber heating element.

### Summary

The object of the present invention is discloses in the independent claims 1, 10 and 14.

In one aspect of the invention, an endodontic condenser includes a tip to pack gutta-percha or other materials into voids of a tooth, such as an empty root canal, a heater to heat the tip, and a control circuit to determine the temperature of the tip while the heater heats the tip. The heater includes an electrically resistive heating element disposed in the tip and having a temperature coefficient of resistance at least 1.3 X 10⁻⁴ /°C and an electrical resistivity at least 1.7 X 10⁻⁸ ohm•m. The tip includes a body for radiating the heat generated by the heating element. The control circuit determines the temperature of the tip by determining the electrical resistance of the heating element while the heating element generates heat. With a temperature coefficient of resistance at least 1.3 X 10⁻⁴ /°C, the electrical resistance of the heating element is sensitive to the temperature of the heating element. With this sensitivity and the ability of the control circuit to determine the resistance of the heating element while the heating element generates heat, the temperature of the condenser's tip may be accurately determined.

### Brief Description Of The Figures

FIG. 1 is a cross-sectional view of a conventional endodontic condenser that incorporates a thermocouple.
FIG. 2 is a perspective view of an endodontic condenser system that incorporates a heater according to an embodiment of the invention.
FIG. 3 is a cross-sectional view of a tip of the system in FIG. 2 showing a heating element of the heater in FIG. 2.
FIG. 4 is a schematic view of the endodontic condenser system in FIG. 2.
FIG. 5 is a schematic view of an endodontic condenser system according to another embodiment of the invention.

### Detailed Description

The following discussion is presented to enable one skilled in the art to make and use the invention.

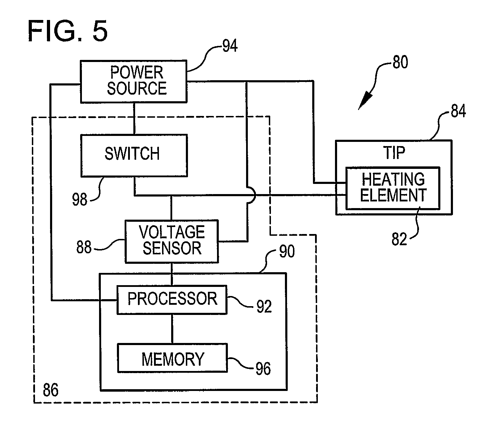

FIG. 2 is a perspective view an endodontic condenser system 30 that incorporates a heater 32 according to an embodiment of the invention. The heater 32 includes a heating element 34 (discussed in greater detail in conjunction with FIG. 3) disposed in a tip 36 of the system 30. The heating element 34 comprises material having a temperature coefficient of resistance at least 1.3 X 10⁻⁴ /°C and an electrical resistivity at least 1.7 X 10⁻⁸ ohm•m, and generates heat by resisting the flow of electricity through it. The condenser system 30 includes a condenser 38 that a dentist or other medical professional grips and maneuvers to pack gutta percha into a void in a tooth (not shown) or to pack other materials into voids in other tissues (not shown), a control unit 40 to power the heater 32, and a cable 42 to couple the condenser to the control unit. The condenser 38 includes a hand-piece 44 for gripping the condenser, and the tip 36, which may be releasably fastened to the hand-piece or not, to exert pressure on the gutta percha or other materials. The control unit 40 includes control circuitry (not shown but discussed in greater detail in conjunction with FIGS. 4 and 5) to determine the temperature of the heating element 34, and thereby the temperature of the tip 36, while the heating element generates heat. The control circuitry may also modify the power to the heating element 34 in response to the determined temperature of the heating element.

Because the electrical resistance of most materials changes as the temperature of the material changes, the temperature of the heating element 34 can be determined from knowing the value of the electrical resistance of the heating element. For some materials the relationship between the electrical resistance and the temperature is linear or substantially linear. For example, a 5° increase in the materials temperature will increase the materials electrical resistance 2 ohms over a range of temperatures. For other materials the relationship between the electrical resistance and the temperature is not linear. For example, an increase in the materials temperature from 100° to 105° (a 5° increase) will increase the material's electrical resistance 2 ohms, and an increase in temperature from 105° to 110° (another 5° increase) will increase the electrical resistance 4 ohms. In addition, for some materials the material's electrical resistance increases as the material's temperature increases, for example nickel, iron, copper and gold, and for other materials the material's electrical resistance decreases as the material's temperature increases, for example carbon. To indicate the sensitivity of a material's electrical resistance to the material's temperature, each material has a temperature coefficient of resistance.

If a temperature coefficient of resistance is a positive value, then by choosing a material with an increased thermal coefficient of resistance one can increase the change in the heating element's electrical resistance relative to a change in the heating element's temperature. Thus, one can more easily sense changes in the heating element's electrical resistance. Therefore, by using a heating element 34 comprising material having a temperature coefficient at least 1.3 X 10⁻⁴ /°C to generate heat, and determining the resistance of the heating element 34 while the heating element generates heat, one is able to more accurately determine the temperature of the heating element. Thus, the likelihood of overheating gutta percha or a patient's tissues may be avoided.

Still referring to FIG. 1, the tip 36 may be shaped as desired to facilitate access to a void in the tooth or other tissue, and packing gutta percha or other material into the void. For example, in one embodiment the tip 36 is curved to facilitate a dentist's or other medical professional's access to a void in a patient's tooth that opens to the patient's mouth through the top of the tooth. Furthermore, the distal end 46 of the tip 36 is flat or substantially flat to exert pressure on the gutta percha or other material in a direction that is substantially aligned with the tip. In other embodiments, the tip 36 may be straight or substantially straight to facilitate a dentist's or other medical professional's access to a void in a patient's tooth that opens through the side of the tooth. And the distal end 46 of tip 36 may be pointed (not shown) to exert less pressure on the gutta percha or other material than one can exert with the substantially flat distal end 46 and in a direction that is not substantially aligned with the tip.

Other embodiments of the system are contemplated. For example, the control circuitry of the control unit 40 may be disposed within the hand-piece 44. Or, a battery (not shown) for powering the heater 32 and the control circuitry may be disposed within the hand-piece 44. This may be desirable to allow a dentist or other medical professional to use the condenser system 30 where the dentist or other medical professional cannot access a conventional power outlet like those mounted to a wall of the dentist's or other medical professional's office.

FIG. 3 is a cross-sectional view of a portion of the tip 36 of the system 30 in FIG. 2 according to an embodiment of the invention and shows the heating element 34 of the heater 32 in FIG. 2.

The heating element 34 may comprise any desired material that has a temperature coefficient of resistance at least 1.3 X 10⁻⁴ /°C and an electrical resistivity at least 1.7 X 10⁻⁸ ohm•m. For example, in one embodiment the heating element 34 comprises nickel. Nickel's temperature coefficient of resistance is approximately 5.866 X 10⁻³/°C at 20°C and nickel's electrical resistivity is approximately 7.0 X 10⁻⁸ ohm•m. With an electrical resistivity greater than the electrical resistivity of copper and other conventional conductors that are chosen to improve thermocouple performance, the heating element 34 generates more heat from electricity flowing through it than heating elements made from conventional conductors. Consequently, the heating element 34 is more efficient than heating elements made from conventional conductors. In other embodiments, the heating element 34 may comprise iron, steel, platinum, molybdenum, tungsten, zinc, nickel-iron. The temperature coefficient of resistance and electrical resistivity for each of these materials is provided in the table below.

**Table Of Materials And Their Respective Approximate Temperature Coefficient Of Resistance At 20 °C And Approximate Electrical Resistivity**

| **Material** | **Temperature Coefficient of resistance** | **Electrical Resistivity** |
|---|---|---|
| **Iron** | **5.6 X 10⁻³/°C** | **9.6 X 10⁻⁸ ohm**•**m** |
| **Steel (99.5% iron .5% Carbon)** | **3.0 X 10⁻³/°C** | **1.6 X 10⁻⁷ ohm**•**m** |
| **Platinum** | **3.7 X 10⁻³/°C** | **1.0 X 10⁻⁷ ohm**•**m** |
| **Molybdenum** | **4.5 X 10⁻³/°C** | **5.3 X 10⁻⁸ ohm**•**m** |
| **Tungsten** | **4.4 X 10⁻³/°C** | **5.2 X 10⁻⁸ ohm**•**m** |
| **Zinc** | **3.8 X 10⁻³/°C** | **5.9 X 10⁻⁸ ohm**•**m** |
| **Nickel-iron** | **3.3 X 10⁻⁴/°C** | **1.2 X 10⁻⁶ ohm**•**m** |

From the table, iron's temperature coefficient of resistance is approximately 5.671 X 10⁻³/°C at 20°C, and iron's electrical resistivity is approximately 9.6 X 10⁻⁸ ohm•m. Thus, iron would work well as a material for the heating element 34. Platinum's temperature coefficient of resistance is approximately 3.729 X 10⁻³/°C at 20°C and remains constant or substantially constant, i.e. the relationship between the electrical resistance and the temperature is linear or substantially linear, from 0°C to approximately 250°C, and platinum's electrical resistivity is approximately 1.0 X 10⁻⁷ ohm•m. Thus, platinum would work well as a material for the heating element 34.

Other embodiments are contemplated. For example, the heating element 34 may comprise a material whose thermal coefficient of resistance decreases as the temperature of the material increases.

Still referring to FIG. 3 the heater 32 also includes an insulator 48 to ensure that the electricity flowing through the heating element 34 flows through a substantial portion of the heating element's length. The insulator 48 may be any conventional material capable of electrically insulating the heating element 34 throughout the range of temperatures that the heating element 34 heats the tip 36 to. For example, in one embodiment the insulator is Kapton^{®} and is mounted to the heating element 34 using conventional techniques.

The tip 36 includes a body 50 to radiate the heat generated by the heating element 34 and to exert pressure on the gutta-percha and other materials to pack them into a void in a tooth or other tissues. The body 50 includes a core 52 to protect the heating element 34 and strengthen the tip 36, and a jacket 54 to distribute the heat generated by the heating element 34 across the body 50.

Because the system 30 (FIG. 2) does not incorporate a thermocouple to determine the temperature of the body 50, the core 52 and jacket 54 may comprise any material having a desired combination of thermal conductivity and thermal capacity that provides the tip 36 desired thermal effects. Thermal conductivity is a measure of a material's ability to transmit heat through it, and thermal capacity is a measure of a material's ability to store heat within it. A material having high thermal conductivity and low thermal capacity will quickly reach a level of heat saturation and quickly radiate additional heat added to the material. When heat is no longer added to this material, the material will quickly cool down. A material having a low thermal conductivity and high thermal capacity will not quickly reach a level of heat saturation and not quickly radiate additional heat added to it. When heat is no longer added to this material, the material will slowly cool down. Therefore, to provide a tip 36 whose temperature changes quickly relative to changes in the heat generated by the heating element 34, and thus is more thermally responsive, the tip 36 should comprise materials having high thermal conductivity and low thermal capacity.

In one embodiment of the body 50, the core 52 comprises stainless steel, whose thermal conductivity is approximately 16 W/m-°K and whose thermal capacity is approximately 0.50 J/g-°C, and the jacket 54 comprises copper, whose thermal conductivity is approximately 386 W/m-°K and whose thermal capacity is approximately 0.39 J/g-°C. The core 52 is clad with the jacket 54 using conventional copper cladding techniques. With the jacket 54 having a higher thermal conductivity than the core 52, the jacket can distribute heat it receives from hotter portions of the core to cooler portions of the core, and thus evenly distribute the heat generated by the heating element 34 across the tip 36.

Other embodiments are contemplated. For example, the core 52 may comprise tantalum whose thermal conductivity is approximately 54.40 W/m-°K and whose thermal capacity is approximately 0.15 J/g-°C. Because tantalum is more expensive and more difficult to work with than stainless steel, tantalum may be desirable if the added expense can be justified. For another example, the jacket 54 may comprise gold, which has similar thermal conductivity and capacity characteristics as copper, or the copper may be clad with gold to protect the copper. In addition, the jacket 54 may comprise silver and/or tantalum.

Still referring the FIG. 3, in one embodiment, the heater 32 heats the tip 36 as follows. Electricity flows through a lead 56, which is connected to the heating element 34 and coupled to the control unit 40 (FIG. 1), and enters the heating element. Upon entering the heating element 34, the electricity is directed to flow through a substantial portion of the heating element's length by the insulator 48. Once the electricity reaches the end 58 of the heating element 34, the electricity flows through the un-insulated portion of the heating element and toward the jacket 54. By resisting the flow of electricity, the heating element generates heat that the tip's body 50 radiates. Once in the jacket 54, the electricity flows toward the hand-piece 44 (FIG. 2)and returns to the control unit 40.

FIG. 4 is a schematic view of the endodontic condenser system 30 in FIG. 2. The control unit 40 (FIG. 1) powers the heater 32 (FIGS. 2 and 3) and includes control circuitry 60 to determine the temperature of the heating element 34, and thereby the temperature of the tip 36, while the heating element generates heat. By determining the temperature of the heating element 34 while the heating element generates heat, the control circuitry 60 can determine the temperature of the heating element more accurately than a thermocouple can. Thus, the control circuitry 60 can permit quick, more accurate regulation of the heat generated by the heating element 34.

As previously discussed, the temperature of the heating element 34 can be determined from knowing the value of the electrical resistance of the heating element. From Ohm's law, the value of the heating element's electrical resistance can be determined from knowing the voltage across the heating element 34 and the amount of current flowing through the heating element. Therefore, the temperature of the heating element can be determined from knowing the amount of voltage the control unit supplies the heating element 34, the amount of electrical current flowing through the heating element, and the relationship of the heating element's resistance to the heating element's temperature.

In one embodiment, the control unit 40 includes the power source 74 that supplies a constant or substantially constant, known voltage to the heating element 34, and the control circuitry 60 includes a Hall-effect sensor 62 to sense the amount of electrical current flowing through the heating element. The Hall-effect sensor 62 is located near the lead 64 that supplies the voltage from the power source 74 to the heating element 34. When electricity flows through the lead 64 the current generates a magnetic field around the lead that is proportional to the amount of electricity flowing through the lead. The magnetic field causes the Hall-effect sensor 62 to generate a voltage that is proportional to the magnetic field. By measuring the voltage generated by the sensor 62, one can determine the electrical current flowing through the heating element 34. With the current through the heating element 34 and the voltage across the heating element known, one can determine the resistance, and thus the temperature, of the heating element.

The control circuitry 60 also includes processing circuitry 66 to determine the temperature of the heating element 34. The processing circuitry 66 includes a processor 68 and a memory 70 coupled to the processor for performing computer functions such as executing software to perform desired calculations and tasks. For example, in one embodiment the processor 68 receives data that corresponds to the output voltage of the Hall-effect sensor 62. The processor 68 then retrieves a look-up table from the memory 70 to obtain the amount of current flowing through the heating element 34 that correlates with the sensor's voltage. The processor 68 then receives data that corresponds to the voltage delivered to the heating element 34 and then calculates the resistance from the two types of data. Next, the processor retrieves a look-up table from the memory 70 to obtain the temperature of the heating element that correlates with the element's electrical resistance. The look-up table correlating temperature to electrical resistance is often generated from empirical data and allows the heating element 34 to comprise material that does not have a linear or substantially linear relationship between the material's electrical resistance and temperature.

Other embodiments are contemplated. For example, the processor 68 may determine the heating element's temperature by solving an equation that correlates the heating element's electrical resistance to the element's temperature. This may be desirable when the heating element's electrical resistivity has a linear or substantially linear correlation with the element's temperature or when an equation correlating the electrical resistance with the temperature is known.

With the temperature of the heating element 34 determined, the control circuitry 60 may then correspondingly modify the voltage delivered to the heating element 34, and thus the amount of current flowing through the heating element, to increase or decrease as desired the heat generated by the heating element. For example, in one embodiment the control circuitry 60 includes a switch 72 coupled to the processor 68. The switch 72 may be any conventional switch that may be set to permit electricity to flow through the heating element 34 or prevent electricity from flowing through the heating element. To set the switch 72, the processor 68 sends the switch 72 data corresponding to instructions to permit electricity to flow toward the heating element 34 or prevent electricity from flowing toward the element.

Other embodiments are contemplated. For example, the power source 74 may generate different voltages to be supplied to the heating element 34, or the switch 72 may modify the voltage - other than permitting or preventing electricity to flow toward the heating element. In addition, the processor 68 may send data corresponding to instructions to modify the voltage supplied to the heating element 34 according to the determined temperature of the heating element and may be coupled to the power source 74, switch 72 or both. This may be desirable to decrease the time the tip 36 takes to reach a desired temperature. For example, when the tip 36 is initially heated to raise its temperature from ambient temperature, the heating element requires a large amount of current to raise the temperature, and after the tip has reached the desired temperature, the heating element requires less current to maintain the temperature. To provide the heating element 34 the appropriate amount of current to quickly raise the temperature and then to maintain the temperature, the control unit 40 would supply the heating element different voltages for each function.

FIG. 5 is a schematic view of the endodontic condenser system 80 according to another embodiment of the invention. The system 80 is similar to the system 30 (FIGS. 2 - 4) except the control unit 40 (FIG. 2) provides a known amount of current to the heating element 82 of the tip 84, and the control circuitry 86 includes a voltage sensor 88 to sense the voltage across the heating element 82. With the amount of current delivered to the heating element 82 and the voltage across the heating element known, the control circuitry 86 may determine the electrical resistance of the heating element, and thus the temperature of the heating element.

In one embodiment, the control circuitry 86 includes processing circuitry 90 to determine the temperature of the heating element 82 and correspondingly modify the current delivered to the heating element, and thus the voltage across the heating element. The processing circuitry 90 includes a processor 92 coupled with the voltage sensor 88 to receive data that corresponds to the voltage across the heating element 82. The processor 92 is also coupled with the power source 94 to receive data corresponding to the amount of current delivered to the heating element 82 and to send data to the power source to modify the amount of current delivered to the heating element. In addition, the processor 92 is coupled to the memory 96 that stores a look-up table or equation correlating the temperature of the heating element 82 with the data corresponding to the voltage across the heating element. The control circuitry 86 also includes a switch 98 to allow a dentist or other medical professional to permit or stop electricity from flowing to the heating element 82.

Other embodiments are contemplated. For example, the switch 98 may be used to modify the current delivered to the heating element 82, and the processor 92 may be coupled to the switch 98 and send data to the switch for modifying the current.

## Claims

1. An endodontic condenser tip (36) comprising:
a heater (32) including:
an electrically resistive heating element (34) operable to generate heat from electrical current flowing through the heating element (34); and
a control circuit (86) operable to sense either the electrical current through or the voltage across the heating element (34) as the heating element (34) receives the electrical current, and operable to determine a temperature of the heating element (34) from the electrical current or voltage sensed, while the heating element (34) generates heat; and
a body (50) for radiating the heat generated by the heating element (34).

2. The tip (36) of claim 1 wherein the heating element (34) has a length, and includes an electrically insulating layer (48) to direct electricity through the length or a substantial portion of the length.

3. The tip (36) of claim 1 wherein the body includes:
a core (52) to strengthen the tip (36), and
a jacket (54) having a coefficient of thermal conductivity at least 380 W/m-°K and operable to distribute the heat generated by the heating element (34) across the body (50).

4. The tip(36) of claim 1 wherein the heating element (34) comprises nickel and has a temperature coefficient of resistance of approximately 5.866 X 10⁻³ /°C at 20°C and an electrical resistivity of approximately 7.0 x 10⁻⁸ ohm•m.

5. The tip (36) of claim 1 wherein the heating element (34) has a temperature coefficient of resistance that increases as the temperature of the heating element (34) increases.

6. The tip (36) of claim 1 wherein the heating element (34) has a temperature coefficient of resistance that decreases as the temperature of the heating element (34) increases.

7. The tip (36) of claim 1 wherein the heating element (34) has a temperature coefficient of resistance that increases linearly or substantially linearly as the temperature of the heating element (34) increases.

8. The tip (36) of claim 1 wherein the heating element (34) has an electrical resistivity of at least 1.7 x 10⁻⁸ ohm•m and a temperature coefficient of resistance of at least 1.3 x 10⁻⁴/°C that increases linearly or substantially linearly relative to an increase in temperature between 40°C and 80°C of the heating element (34).

9. The tip (36) of claim 1 wherein the heating element (34) has an electrical resistivity substantially equal to 7.0 X 10⁻⁸ ohm•m, and a temperature coefficient of resistance at least 1.3 x 10⁻⁴/°C.

10. A system (30, 80) comprising:
a hand-piece (44) for gripping the system (30, 80);
an endodontic condenser tip (36) fastenable to the hand-piece (44) and including
a heater (32) comprising:
an electrically resistive heating element (34) disposed in the tip and operable to generate heat from electrical current flowing through the heating element (34);
a control circuit (86) operable to sense either the electrical current through or the voltage across the heating element (34) as the heating element (34) receives the electrical current, and operable to determine a temperature of the heating element (34) from the electrical current or voltage, while the heating element (34) generates heat; and
a body (50) for radiating the heat generated by the heating element (34).

11. The system (30, 80) of claim 10 wherein the control circuit (86) is operable to regulate the heat generated by the heating element.

12. The system (30, 80) of claim 10 wherein the control circuit (86) is operable to sense the electrical current flowing through the heating element (34) to determine the temperature of the heating element (34).

13. The system (30, 80) of claim 10 wherein the control circuit (86) is operable to sense the voltage across the heating element (34) to determine the temperature of the heating element (34).

14. A method for heating a tip (36) of an endodontic condenser (38), the method comprising:
resisting the flow of electricity with an electrically resistive heating element (34) of a heater (32) to generate heat;
sensing, with a control circuit (86) either the electrical current through or the voltage across the heating element (34) as the heating element (34) received the electrical current; and
determining, from the electrical current or voltage sensed, the temperature of the heating element (34) while the heating element (34) generates heat.

15. The method of claim 14 wherein determining the temperature of the heating element (34) includes determining the electrical resistance of the heating element (34).

16. The method of claim 15 wherein determining the electrical resistance of the heating element (34) includes sensing electrical current flowing through the heating element (34).

17. The method of claim 16 wherein sensing electrical current flowing through the heating element (34) includes sensing a magnetic field generated by the flow of current through the heating element (34).

18. The method of claim 15 wherein determining the electrical resistance of the heating element (34) includes sensing a voltage across the heating element (34).

## Patentansprüche

1. Endodontische Kondensatorspitze (36) aufweisend:
eine Heizvorrichtung (32) umfassend:
ein elektrisch resistives Heizelement (34), das betriebsfähig ist, Wärme aus einem elektrischen Strom zu erzeugen, der durch das Heizelement (34) fließt; und
eine Steuerschaltung (86), die betriebsfähig ist, entweder den elektrischen Strom durch das oder die Spannung über dem Heizelement (34) aufzunehmen, während das Heizelement (34) den elektrischen Strom empfängt, und betriebsfähig ist, eine Temperatur des Heizelements (34) aus dem aufgenommenen elektrischen Strom oder der Spannung zu bestimmen, während das Heizelement (34) Wärme erzeugt; und
einen Körper (50) zum Abstrahlen der Wärme, die durch das Heizelement (34) erzeugt wird.

2. Spitze (36) nach Anspruch 1, wobei das Heizelement (34) eine Länge aufweist und eine elektrisch isolierende Schicht (48) umfasst, um die Elektrizität durch die Länge oder einen wesentlichen Teil der Länge zu leiten.

3. Spitze (36) nach Anspruch 1, wobei der Körper umfasst:
einen Kern (52), um die Spitze (36) zu stärken, und
einen Mantel (54) mit einer Wärmeleitzahl von wenigstens 380 W/m-°K, der betriebsfähig ist, die Wärme, die durch das Heizelement (34) erzeugt wird, über den Körper (50) zu verteilen.

4. Spitze (36) nach Anspruch 1, wobei das Heizelement (34) Nickel aufweist und einen Temperaturkoeffizienten des Widerstands von ungefähr 5,866 X 10⁻³/°C bei 20 °C aufweist und einen spezifischen elektrischen Widerstand von ungefähr 7,0 x 10⁻⁸ Ohm·m.

5. Spitze (36) nach Anspruch 1, wobei das Heizelement (34) einen Temperaturkoeffizienten des Widerstands aufweist, der größer wird, während die Temperatur des Heizelements (34) zunimmt.

6. Spitze (36) nach Anspruch 1, wobei das Heizelement (34) einen Temperaturkoeffizienten des Widerstands aufweist, der kleiner wird, während die Temperatur des Heizelements (34) zunimmt.

7. Spitze (36) nach Anspruch 1, wobei das Heizelement (34) einen Temperaturkoeffizienten des Widerstands aufweist, der linear oder im Wesentlichen linear größer wird, während die Temperatur des Heizelements (34) zunimmt.

8. Spitze (36) nach Anspruch 1, wobei das Heizelement (34) einen spezifischen elektrischen Widerstand von wenigstens 1,7 x 10⁻⁸ Ohm·m aufweist und einen Temperaturkoeffizienten des Widerstands von wenigstens 1,3 x 10⁻⁴/°C, der linear oder im Wesentlichen linear größer wird relativ zu einer Zunahme der Temperatur zwischen 40 °C und 80 °C des Heizelements (34).

9. Spitze (36) nach Anspruch 1, wobei das Heizelement (34) einen spezifischen elektrischen Widerstand im Wesentlichen gleich 7,0 X 10⁻⁸ Ohm·m aufweist und einen Temperaturkoeffizienten des Widerstands von wenigstens 1,3 x 10⁻⁴/°C.

10. System (30,80) aufweisend:
ein Handstück (44) zum Greifen des Systems (30, 80);
eine endodontische Kondensatorspitze (36), die an dem Handstück (44) befestigbar ist und umfasst
eine Heizvorrichtung (32) aufweisend:
ein elektrisch resistives Heizelement (34), das in der Spitze angeordnet ist und betriebsfähig ist, Wärme aus einem elektrischen Strom zu erzeugen, der durch das Heizelement (34) fließt;
eine Steuerschaltung (86), die betriebsfähig ist, entweder den elektrischen Strom durch das oder die Spannung über dem Heizelement (34) aufzunehmen, während das Heizelement (34) den elektrischen Strom empfängt, und betriebsfähig ist, eine Temperatur des Heizelements (34) aus dem elektrischen Strom oder der Spannung zu bestimmen, während das Heizelement (34) Wärme erzeugt; und
einen Körper (50) zum Abstrahlen der Wärme, die durch das Heizelement (34) erzeugt wird.

11. System (30,80) nach Anspruch 10, wobei die Steuerschaltung (86) betriebsfähig ist, die durch das Heizelement erzeugte Wärme zu steuern.

12. System (30,80) nach Anspruch 10, wobei die Steuerschaltung (86) betriebsfähig ist, den durch das Heizelement (34) fließenden elektrischen Strom aufzunehmen, um die Temperatur des Heizelements (34) zu bestimmen.

13. System (30,80) nach Anspruch 10, wobei die Steuerschaltung (86) betriebsfähig ist, die Spannung über dem Heizelement (34) aufzunehmen, um die Temperatur des Heizelements (34) zu bestimmen.

14. Verfahren zum Erwärmen einer Spitze (36) eines endodontischen Kondensators (38), wobei das Verfahren aufweist:
Widerstehen des Flusses von Elektrizität mit einem elektrisch resistiven Heizelement (34) einer Heizvorrichtung (32), um Wärme zu erzeugen;
Aufnehmen entweder des elektrischen Stroms durch das oder der Spannung über dem Heizelement (34) mit einer Steuerschaltung (86), während das Heizelement (34) den elektrischen Strom empfängt; und
Bestimmen der Temperatur des Heizelements (34) aus dem aufgenommenen elektrischen Strom oder der Spannung, während das Heizelement (34) Wärme erzeugt.

15. Verfahren nach Anspruch 14, wobei das Bestimmen der Temperatur des Heizelements (34) das Bestimmen des elektrischen Widerstands des Heizelements (34) umfasst.

16. Verfahren nach Anspruch 15, wobei das Bestimmen des elektrischen Widerstands des Heizelements (34) das Aufnehmen eines elektrischen Stroms umfasst, der durch das Heizelement (34) fließt.

17. Verfahren nach Anspruch 16, wobei das Aufnehmen des durch das Heizelement (34) fließenden elektrischen Stroms das Aufnehmen eines magnetischen Felds umfasst, das durch den Fluss des Stroms durch das Heizelement (34) erzeugt wird.

18. Verfahren nach Anspruch 15, wobei das Bestimmen des elektrischen Widerstands des Heizelements (34) das Aufnehmen einer Spannung über dem Heizelement (34) umfasst.

## Revendications

1. Pointe (36) de condenseur endodontique comprenant :
un dispositif de chauffage (32) comprenant :
un élément de chauffage (34) électriquement résistif mis en oeuvre pour générer de la chaleur à partir de courant électrique circulant à travers l'élément de chauffage (34) ; et
un circuit de commande (86) mis en oeuvre pour détecter soit le courant électrique à travers, soit la tension aux bornes de, l'élément de chauffage (34) comme l'élément de chauffage (34) reçoit le courant électrique, et mis en oeuvre pour déterminer une température de l'élément de chauffage (34) à partir du courant électrique ou de la tension détectés, tandis que l'élément de chauffage (34) génère de la chaleur ; et
un corps (50) destiné à rayonner la chaleur générée par l'élément de chauffage (34).

2. Pointe (36) selon la revendication 1, dans laquelle l'élément de chauffage (34) a une longueur, et comprend une couche électriquement isolante (48) pour diriger l'électricité sur la longueur ou une partie substantielle de la longueur.

3. Pointe (36) selon la revendication 1, dans laquelle le corps comprend :
un noyau (52) pour renforcer la pointe (36), et
une enveloppe (54) ayant un coefficient de conductivité thermique d'au moins 380 W/m-°K et mise en oeuvre pour distribuer la chaleur générée par l'élément de chauffage (34) à travers le corps (50).

4. Pointe (36) selon la revendication 1, dans laquelle l'élément de chauffage (34) comprend du nickel et a un coefficient thermique de résistance d'approximativement 5, 866 X 10⁻³/°C à 20°C et une résistivité électrique d'approximativement 7, 0 x 10⁻⁸ ohm•m.

5. Pointe (36) selon la revendication 1, dans laquelle l'élément de chauffage (34) a un coefficient thermique de résistance qui augmente à mesure que la température de l'élément de chauffage (34) augmente.

6. Pointe (36) selon la revendication 1, dans laquelle l'élément de chauffage (34) a un coefficient thermique de résistance qui diminue à mesure que la température de l'élément de chauffage (34) diminue.

7. Pointe (36) selon la revendication 1, dans laquelle l'élément de chauffage (34) a un coefficient thermique de résistance qui augmente de façon linéaire ou substantiellement linéaire à mesure que la température de l'élément de chauffage (34) augmente.

8. Pointe (36) selon la revendication 1, dans laquelle l'élément de chauffage (34) a une résistivité électrique d'au moins 1, 7 x 10⁻⁸ ohm•m et un coefficient thermique de résistance d'au moins 1, 3 x 10⁻⁴/°C qui augmente de façon linéaire ou substantiellement linéaire par rapport à une augmentation de la température entre 40°C et 80°C de l'élément de chauffage (34).

9. Pointe (36) selon la revendication 1, dans laquelle l'élément de chauffage (34) a une résistivité électrique substantiellement égale à 7, 0 X 10⁻⁸ ohm•m, et un coefficient thermique de résistance d'au moins 1, 3 x 10⁻⁴/°C.

10. Système (30, 80) comprenant :
une pièce à main (44) pour saisir le système (30, 80) ;
une pointe (36) de condenseur endodontique fixée sur la pièce à main (44) et comprenant :
un dispositif de chauffage (32) comprenant :
un élément de chauffage (34) électriquement résistif disposé dans la pointe et mis en oeuvre pour générer de la chaleur à partir de courant électrique circulant à travers l'élément de chauffage (34) ;
un circuit de commande (86) mis en oeuvre pour détecter soit le courant électrique à travers, soit la tension aux bornes de, l'élément de chauffage (34) comme l'élément de chauffage (34) reçoit le courant électrique, et mis en oeuvre pour déterminer une température de l'élément de chauffage (34) à partir du courant électrique ou de la tension, tandis que l'élément de chauffage (34) génère de la chaleur ; et
un corps (50) destiné à rayonner la chaleur générée par l'élément de chauffage (34).

11. Système (30, 80) selon la revendication 10, dans lequel le circuit de commande (86) est mis en oeuvre pour réguler la chaleur générée par l'élément de chauffage.

12. Système (30, 80) selon la revendication 10, dans lequel le circuit de commande (86) est mis en oeuvre pour détecter le courant électrique circulant à travers l'élément de chauffage (34) pour déterminer la température de l'élément de chauffage (34).

13. Système (30, 80) selon la revendication 10, dans lequel le circuit de commande (86) est mis en oeuvre pour détecter la tension aux bornes de l'élément de chauffage (34) pour déterminer la température de l'élément de chauffage (34).

14. Procédé pour chauffer une pointe (36) d'un condenseur endodontique (38), le procédé consistant à :
résister à la circulation d'électricité avec un élément de chauffage (34) électriquement résistif d'un dispositif de chauffage (32) pour générer de la chaleur ;
détecter, avec un circuit de commande (86), soit le courant électrique à travers, soit la tension aux bornes de, l'élément de chauffage (34) comme l'élément de chauffage (34) a reçu le courant électrique ; et
déterminer, à partir du courant électrique ou de la tension détectés, la température de l'élément de chauffage (34) tandis que l'élément de chauffage (34) génère de la chaleur.

15. Procédé selon la revendication 14, selon lequel la détermination de la température de l'élément de chauffage (34) comprend la détermination de la résistance électrique de l'élément de chauffage (34).

16. Procédé selon la revendication 15, selon lequel la détermination de la résistance électrique de l'élément de chauffage (34) comprend la détection du courant électrique circulant à travers l'élément de chauffage (34).

17. Procédé selon la revendication 16, selon lequel la détection du courant électrique circulant à travers l'élément de chauffage (34) comprend la détection d'un champ magnétique généré par la circulation du courant à travers l'élément de chauffage (34).

18. Procédé selon la revendication 15, selon lequel la détermination de la résistance électrique de l'élément de chauffage (34) comprend la détection d'une tension aux bornes de l'élément de chauffage (34).
